Europäisches Patentamt

European Patent Office

Office européen des brevets

(19)

(11) Publication number: **0 036 674**
**B1**

(12)

# EUROPEAN PATENT SPECIFICATION

(45) Date of publication of patent specification: **04.06.86**

(51) Int. Cl.⁴: **F 16 L 11/08,** B 29 C 47/02

(21) Application number: **81200111.3**

(22) Date of filing: **30.01.81**

(54) Method of making plastics tubing.

(30) Priority: **22.03.80 GB 8009780**

(43) Date of publication of application:
**30.09.81 Bulletin 81/39**

(45) Publication of the grant of the patent:
**04.06.86 Bulletin 86/23**

(84) Designated Contracting States:
**DE FR GB IT NL SE**

(56) References cited:
**AT-B- 335 240**
**DE-A-2 430 539**
**US-A-3 814 138**
**US-A-3 860 040**

(73) Proprietor: **Copely Developments Limited**
**Thurmaston Lane**
**Leicester LE4 7HR (GB)**
(73) Proprietor: **Copely, James Dorien**
**Forestend 60 Main Street**
**Swithland, Nr Leicester (GB)**

(72) Inventor: **Copely, James Dorien**
**Forestend 60 Main Street**
**Swithland, Nr Leicester (GB)**

(74) Representative: **Coxon, Philip et al**
**Eric Potter & Clarkson 14 Oxford Street**
**Nottingham NG1 5BP (GB)**

Courier Press, Leamington Spa, England.

## Description

The present invention relates to a method of making plastics tubing and more particularly relates to a method of making plastics tubing including an inner and an outer tube made of plastics such as, for example, polyvinylchloride (P.V.C.), polyurethane, polyolefins or polyamides.

It is known to form a plastics tube, for example by extrusion through a circular die, to reinforce that tube by applying a reinforcing material such as a textile or a metallic material, normally in braid or lap form, over the exterior surface thereof, and to apply a second (outer) tube, generally by extrusion over the inner tube and the reinforcing material. Preferably, the outer tube is applied over the inner tube and the reinforcing material whilst the inner tube is still warm from its own formation, which is generally by extrusion, so that the materials of the inner and outer tubes can blend together and entrap the reinforcing material therebetween. It is desirable to ensure that the outer tube does adequately bond to the inner tube in order to provide for sufficient peel strength of the finished tubing and it is further known to apply substances such as adhesives and bonding agents to the exterior surface of the inner tube to assist in the bonding of the outer tube thereto. Problems sometimes arise with known reagents and it is known for misbonding to occur in which event the inner and outer tubes are often separated from one another with the reinforcing material being bonded to neither the inner nor the outer tube which reduces the strength and thus the ability of the tubing to withstand internal pressure.

In US—A—3,860,040 there is described a flexible hose construction comprising a core tube having axial striations about its periphery, and the striations may be of V-shaped cross-section. An outer layer of flexible material is bonded to the core tube by an adhesive, and reinforcing material may be provided between the outer layer and the core tube. The purpose of the striations is to provide an even distribution of adhesive over the outer surface of the core tube.

In US—A—3,814,138 a reinforced plastics hose is disclosed which comprises an inner core having longitudinal ridges and valleys on its outer surface about which a reinforcing braid is wrapped. A protective cover is extruded over the core and braid and flows into the spaces between the valleys and the braid. This locks the braid and cover against rotational movement relative to the core, but permits limited relative longitudinal movement because the cover is not bonded directly to the core.

AT—B—335,240 describes a method of manufacturing a reinforced flexible pressure hose in which a thermoplastic tube is provided with an external reinforcement of braided or spiral form. The assembly is heated while applying a positive pressure difference between the inside and outside of the tube to cause expansion of the tube against the reinforcement so that the outer surface of the tube is deformed to follow the internal contours of the reinforcement. An outer sheath can be provided covering the braid.

It has now been found that the use of a particular form of plastics tubing made in accordance with a particular method makes possible the provision of flexible plastics tubing which has substantially the same strength as any given tubing as described hereinabove but which employs a reduced amount of material for that same strength.

Accordingly, the present invention provides a method of forming a plastics tube comprising extruding a plastics material through a die to form a first tube having a plurality of ridges or ribs which are disposed longitudinally of the tube and which define V-shaped valleys therebetween, applying reinforcing thread on the outer surface of the first tube, and extruding a second tube over the first tube and the reinforcing thread, characterised in that the reinforcing thread is applied so that the ridges or ribs space the reinforcing thread from the valleys, and the second tube is extruded over the first tube and the reinforcing thread so as to flow into the valleys to bond the first and second tubes together between adjacent portions of the reinforcing thread.

It will be appreciated that the provision of the ribs and V-shaped valleys will increase the external surface area for a given outer diameter of the first tube.

The reinforcing material which may be a metallic or textile material, but which is preferably a polyamide or textile yarn, can be lapped or braided, for example in criss-cross fashion, over the outer surface of the first tube.

The material used for the second tube is generally similar to or compatible with that used for the first tube and preferably is the same material, such as P.V.C. Conveniently, when P.V.C. is used to form the first and the second tube, it is such that the finished tube is usable over at least a temperature range of from −20°C to 65°C. It is preferred for the second tube to be extruded under pressure over the first tube and its reinforcing material in order to ensure that the material of the second tube flows into or is forced into the valleys on the first tube and to entrap securely the reinforcing material therebetween.

The present invention generally enables a reduction of up to 30% of the material used to form the second tube in comparison with prior art composite tubing and still achieve the same resistance to bursting.

The flexibility of the tubing made using the method of the present invention is high due to the need for less material for a given strength.

Often the second (outer) tube of the tubing made using the method of the present invention does not have a smooth surface, this being particularly so if the material of the second tube is extruded under pressure, and in general the outer surface of the second tube will follow the contours of the formations on the first tube and/or of the reinforcing material. Tubing made using the method of the present invention having an outer surface which is not smooth affords advantages in the coiling thereof. This is because tubing having a smooth outer surface tends to stick to itself, especially smooth P.V.C. surfaces, and this causes problems in automatic coiling which do not occur with tubing of the present invention having a non-smooth surface.

If it is desired to provide tubing of very high strength, reinforcing material may be applied on the outer surface of the second tube, and a third tube applied thereover, thus forming tubing including a first tube, reinforcing material on the outer surface of the first tube, a second tube applied over the first tube and its reinforcing material, reinforcing material on the outer surface of the second tube, and a third tube applied over the second tube and its associated reinforcing material. The second and third tubes are applied so as to entrap the reinforcing materials between the first and second, and second and third tubes respectively. The outer surface of this third tube may be smooth or non-smooth, although any tube produced in the aforementioned manner greatly reduces the interface bond stresses since the flexing shear load on the interface between the substrate and the subsequent layers is spread over a large percentage of the resultant wall thickness of the whole tubing thereby reducing the necessity for high artificial bond strength.

The present invention will be further illustrated with reference to the accompanying drawing, in which:

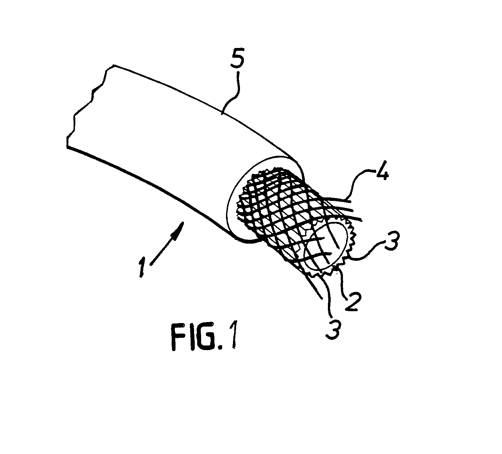

Figure 1 shows a perspective partly cut-away view of a plastics tubing made in accordance with the method of the present invention.

Referring to the drawing, tubing generally designated 1 has a first P.V.C. (preferably black P.V.C.) tube 2 having a series of longitudinally oriented ridges 3. The tapered ridges 3 define V-shaped valleys, each of which is bridged by a plurality of reinforced polyamide yarns 4. Extruded over the first tube 2 and the reinforced polyamide yarns is a second P.V.C. tube 5 having a smooth dimpled outer surface. The ridges 3 are conveniently equally spaced around the circumference of the outer surface of the first tube 2.

The polyamide yarns 4 are braided over the tapered ridges 3 so as to bridge the valleys rather than fill them. This arrangement gives high strength.

It is thought that the present invention provides a method of making plastics tubing having many substantial advantages both as to its formation and to its qualities and characteristics when formed than hitherto known methods.

## Claims

1. A method of forming a plastics tube (1) comprising extruding a plastics material through a die to form a first tube (2) having a plurality of ridges (3) or ribs which are disposed longitudinally of the tube (2) and which define V-shaped valleys therebetween, applying reinforcing thread (4) on the outer surface of the first tube (2), and extruding a second tube (5) over the first tube (2) and the reinforcing thread (4), characterised in that the reinforcing thread is applied so that the ridges (3) or ribs space the reinforcing thread (4) from the valleys, and the second tube (5) is extruded over the first tube (2) and the reinforcing thread (4) so as to flow into the valleys to bond the first and second tubes (2, 5) together between adjacent portions of the reinforcing thread (4).

2. A method according to Claim 1 characterised in that the second tube (5) is extruded under pressure over the first tube (2) and the reinforcing thread (4).

3. A method according to Claim 1 or 2 characterised in that the reinforcing thread (4) is lapped or braided on the outer surface of the first tube (2).

4. A method according to any preceding claim, characterised in that the or each reinforcing thread (4) is natural or synthetic textile yarn.

5. A method according to Claim 4 characterised in that the yarn is composed of a polyamide.

6. A method according to any preceding claim, characterised in that both the first tube (2) and the second tube (5) are composed of polyvinylchloride.

7. A method according to any preceding claim comprising the further steps of applying further reinforcing thread over the surface of the second tube (5), and extending a third tube over the second tube (5) and the further reinforcing thread so as to entrap the further reinforcing thread between the second and third tubes.

## Revendications

1. Méthode de fabrication d'un tuyau (1) en matière plastique comprenant l'extrusion d'une matière plastique à travers une filière pour former un premier tube (2) ayant une pluralité d'arêtes ou nervures (3) qui sont disposées dans le sens longitudinal du tube (2) et qui définissent entre elles des vallées en forme de V, l'application de fil(s) 4 de renforcement sur la surface externe du premier tube (2), et l'extrusion d'un deuxième tube (5) par dessus le premier tube (2) et le fil (4) de renforcement, caractérisée en ce que le fil de renforcement est appliqué de telle sorte que les arêtes ou nervures (3) écartent des vallées le fil (4) de renforcement, et en ce que le deuxième tube (5) est extrudé par dessus le premier tube (2) et le fil (4) de renforcement, de manière à s'écouler dans les vallées pour lier ensemble le premier tube et le deuxième tube (2, 5) entre des parties adjacentes du fil (4) de renforcement.

2. Méthode selon la revendication 1, caractérisée en ce que le deuxième tube (5) est extrudé sous pression par dessus le premier tube (2) et le fil (4) de renforcement.

3. Méthode selon la revendication 1 ou 2 caractérisée en ce que le fil (4) de renforcement est enroulé ou tressé sur la surface externe du premier tube (2).

4. Méthode selon l'une quelconque des revendications précédentes, caractérisée en ce que le fil (4) ou chacun des fils (4) de renforcement est — ou sont — du fil textile naturel ou synthétique.

5. Méthode selon la revendication 4, caractérisée en ce que le fil est composé d'une polyamide.

6. Méthode selon l'une quelconque des revendications précédentes, caractérisée en ce que le premier tube (2) et le second tube (5) sont l'un et l'autre composés de chlorure de polyvinyle.

7. Méthode selon l'une quelconque des revendications précédentes, comprenant en outre le fait d'appliquer du fil de renforcement supplémentaire sur la surface du deuxième tube (5) et d'extruder un troisième tube par dessus le deuxième tube (5) et le fil de renforcement supplémentaire, de manière à emprisonner ce fil de renforcement supplémentaire entre le deuxième tube et le troisième tube.

## Patentansprüche

1. Verfahren zur Herstellung eines Kunststoffschlauches (1), welches das Extrudieren eines Kunststoffes durch eine Düse einschließt, um einen ersten Schlauch (2) mit einer Anzahl von Rippen (3) oder Stegen zu formen, die längs des Schlauches (2) angeordnet sind und zwischen sich V-förmige Vertiefungen bilden, wobei ein Verstärkungsfaden (4) auf der Außenfläche des ersten Schlauches (2) angebracht wird und ein zweiter Schlauch (5) über den ersten Schlauch (2) und den Verstärkungsfaden (4) extrudiert wird, dadurch gekennzeichnet, daß der angebrachte Verstärkungsfaden durch die Rippen (3) oder Stege in Abstand von den Vertiefungen gehalten werden, und der zweite Schlauch (5) über den ersten Schlauch (2) und den Verstärkungsfaden (4) extrudiert wird und dabei in die Vertiefungen fließt und somit den ersten und zweiten Schlauch (2, 5) zwischen den angrenzenden Abschnitten des Verstärkungsfadens (4) miteinander verbindet.

2. Verfahren nach Anspruch 1, dadurch gekennzeichnet, daß der zweite Schlauch (5) mit Druck über den ersten Schlauch (2) und den Verstärkungsfaden extrudiert ist.

3. Verfahren nach Anspruch 1 oder 2, dadurch gekennzeichnet, daß der Verstärkungsfaden (4) auf der Außenfläche des ersten Schlauches (2) gewickelt oder geflochten ist.

4. Verfahren nach einem der vorangehenden Ansprüche, dadurch gekennzeichnet, daß der oder jeder Verstärkungsfaden aus natürlichem oder synthetischem Textilgarn besteht.

5. Verfahren nach Anspruch 4, dadurch gekennzeichnet, daß das Garn aus Polyamid zusammengesetzt ist.

6. Verfahren nach einem der vorangehenden Ansprüche, dadurch gekennzeichnet, daß sowohl der erste (2) als auch der zweite Schlauch (5) aus PVC bestehen.

7. Verfahren nach einem der vorangehenden Ansprüche, welches ferner die Anbringung zusätzlicher Verstärkungsfäden über die Fläche des zweiten Schlauches (5), das Anbringen eines dritten Schlauches über den zweiten Schlauch und den zusätzlichen Verstärkungsfäden einschließt, so daß der zusätzliche Verstärkungsfaden vom zweiten und dritten Schlauch umhüllt ist.

FIG.1